# Europäisches Patentamt

# European Patent Office

# Office européen des brevets

(19)

(11) Veröffentlichungsnummer : **0 213 160 B2**

(12) ## NEUE EUROPÄISCHE PATENTSCHRIFT

(45) Veröffentlichungstag der neuen Patentschrift :
02.09.92 Patentblatt 92/36

(51) Int. Cl.⁵ : **F16C 33/61,** F16C 29/04

(21) Anmeldenummer : 86901334.2

(22) Anmeldetag : 06.02.86

(86) Internationale Anmeldenummer :
**PCT/DE86/00041**

(87) Internationale Veröffentlichungsnummer :
**WO 86/04651 14.08.86 Gazette 86/18**

(54) **AUFLAGER FÜR ROLLENDE LASTENTRÄGER UND VERFAHREN ZU DESSEN HERSTELLUNG.**

(30) Priorität : 07.02.85 DE 3504061

(43) Veröffentlichungstag der Anmeldung :
**11.03.87 Patentblatt 87/11**

(45) Bekanntmachung des Hinweises auf die
Patenterteilung :
**14.06.89 Patentblatt 89/24**

(45) Bekanntmachung des Hinweises auf die
Entscheidung über den Einspruch :
**02.09.92 Patentblatt 92/36**

(84) Benannte Vertragsstaaten :
**DE FR GB**

(56) Entgegenhaltungen :
**DE-A- 2 729 354
DE-B- 1 222 322
DE-C- 927 780
DE-U- 1 940 784
FR-A- 1 553 973
GB-A- 2 136 062**

(73) Patentinhaber : **JACOB, Werner
Briandring 29
W-6000 Frankfurt 70 (DE)**

(72) Erfinder : **JACOB, Werner
Briandring 29
W-6000 Frankfurt 70 (DE)**

(74) Vertreter : **Harwardt, Günther, Dipl.-Ing. et al
Postfach 14 55 Scheerengasse 2
W-5200 Siegburg 2 (DE)**

EP 0 213 160 B2

## Beschreibung

Die Erfindung bezieht sich auf ein Auflager für rollende Lastenträger und ein Verfahren zu dessen Herstellung. Das Auflager besteht in bekannter Weise aus einem Trägerkörper und in diesen durch Kaltverformen eingesetzten Laufschienen, wobei die Tatsache ausgenützt wird, daß es Materialien gibt, die unterschiedliche Kaltfließfähigkeit aufweisen.

Ein gattungsgmäßes Auflager wurde bereits in den fünfziger Jahren in der DE-C-927 780 vorgeschlagen. Bei dem dort offenbarten Auflager wird die Laufschiene in eine Nut des Trägerkörpers eingelegt und die Ränder der Nut des Trägerkörpers durch Kaltfließen an die Laufschiene angedrückt, wodurch die Laufschiene unverrückbar gehalten ist. Dabei weist die Nut gegenüber dem Umriß der Laufschiene ein geringes Untermaß, beispielsweise von 0,02 bis 0,05 mm im Vergleich zur Laufschiene aus, die unter Druckbelastung in diese Nut eingepreßt wird.

Bei der Herstellung eines derartigen Auflagers bei dem zunächst die Laufschiene (Draht) in die Nut durch Ausüben eines Druckes auf die Laufschiene eingedrückt und dann zum Anpressen der Nutränder auf die Ränder des Trägerkörpers ein Druck ausgeübt wird, besteht die Gefahr von Verwerfungen im Verlauf der Laufschiene, und zwar insbesondere auch in vertikaler Richtung, so daß kein exakt ausgerichtetes Lager garantiert werden kann. Die einmal eingepreßten Drähte verlaufen nicht exakt parallel zueinander, ihre Laufflächen liegen vielfach nicht in einer Ebene, so daß sie nachgearbeitet oder beim Einpressen ein unverhältnismäßiger Aufwand getrieben werden muß.

Um diesen Nachteil zu beheben wird in der DE-B-1 222 322 vorgeschlagen, die Auflagefläche im Trägerkörper durch leicht verformbare Rippen zu bilden. Hierdurch können zwar Ungenauigkeiten in der vertikalen Richtung leiht ausgeglichen werden, Verwerfungen in der horizontalen lassen sich dadurch aber auch nicht vermeiden.

Das heisst, daß es bisher nicht möglich gewesen ist, Trägerkörper und Laufschienen auf einfache Weise so miteinander zu verbinden, daß die Verbindung starr und dabei die Laufschiene sich in der optimalen Lage zu den Rollen des Lastenträgers befindet. Dieses Problem ist vor allem dann schwierig zu lösen, wenn zwei Laufschienen zueinander parallel und zu den Laufrollen des Lastenträgers optimal ausgerichtet sein und mit ihrer Lauffläche in einer Ebene liegen müssen.

Die Erfindung hat sich nun die Aufgabe gestellt, ein Drahtlager für rollende Lastenträger zu entwickeln, bei dem der oder die Drähte exakt positionsgerecht fixiert sind, ohne daß irgendeine Nachbearbeitung nach dem Einpressen der Laufschienen (Drähte) in den Trägerkörper notwendig wäre.

Dies wird erfindungsgemäß durch die Merkmale der unabhängigen Ansprüche 1 und 4 und der zugehörigen Verfahrensansprüche 5 und 8 erreicht.

Unter den Teilen des Trägerkörpers, die mit den Laufschienen in Kontakt kommen können, ist die unmittelbare Umgebung der Laufschienen gemeint. Weist der Trägerkörper beispielsweise Nuten für die Aufnahme von Laufschienen auf, so können diese Nuten nach einem weiteren Merkmal der Erfindung mit Überweite zur Aufnahme eines weichen Füllmittels versehen sein, so daß der Trägerkörper ebenfalls aus unter den herrschenden Druckverhältnissen wie die Laufschienen nicht verformbar zu sein braucht.

Die Auswahl der speziellen Ausführungen ist den jeweils gegebenen Verhältnissen anzupassen. Genaue Angaben können deswegen nicht gegeben werden, weil das neue Auflager für leichte und schwere Lastträger unverändert anwendbar ist; ferner ist es sowohl für Linear- wie Ringlager geeignet.

Durch die Maßnahmen nach der Erfindung ist es erstmals möglich, ein sogenanntes Drahtlager so exakt herzustellen, daß es vor Ort nicht mehr nachgestellt werden muß. Zusätzliche Einstellmittel sind also entbehrlich. Der Trägerkörper kann im Strangpreßverfahren einfach produziert werden, eine spangebende Nacharbeit, beispielsweise der Nuten, wenn sie überhaupt gebraucht werden, ist nicht mehr erforderlich. Der große wirtschaftliche Vorteil, der sich neben.der Qualität des Lagers vor allem im Preis ausdrückt, kann nicht hoch genug angesetzt werden.

Bei allen bekannten Auflagern für rollende Lastenträger, bei denen ein oder beide miteinander zu verbindenden Teile (Trägerkörper oder/und Laufschienen) verformbar ist bzw. sind, ist es üblich, die Konturen der beiden einander gegenüberliegenden Kontaktflächen gleich oder mindestens weitgehend ähnlich zu gestalten. Dies bedeutet, daß beispielsweise bei runden Laufschienen über die Hälfte ihres konvexen Umfangs mit einer gleich grossen konkaven Fläche der Nut des Trägerkörpers in Kontakt kommen und der auf die Laufschiene ausgeübte Druck auf eine große Gegenfläche übertragen wird. Um den Trägerkörper oder die Laufschiene so verformen zu können, muß ein überdimensionaler Druck auf die Laufschiene ausgeübt werden. Dies erfordert einerseits nicht nur einen hohen Maschinen-, sondern auch einen hohen Energieaufwand, andererseits aber eine hohe Materialqualität der Laufschiene.

Bei der Realisierung der Erfindung kann für jede Laufschiene eine Nut mit u- oder v-förmigem Querschnitt für eine Laufschiene mit rundem Querschnitt oder umgekehrt vorgesehen sein. Weisen Nut und Laufschiene beide einen rechteckigen Querschnitt auf, kann eines der Teile Rippen, Noppen od. dgl. als Kontaktfläche für die ebene Gegenfläche aufweisen.

Dieses Merkmal der Erfindung läßt sich also dadurch in die Praxis umsetzen, daß sich die Formen der beiden Kontaktflächen weitgehend voneinander unterscheiden, oder, daß bei gleicher Form eine der Kontaktflächen unterbrochen ist.

Alle diese Formen sind so auszubilden, daß beide Teile des Auflagers strangpreßbar sind, d.h., daß beispielsweise die Unterbrechung einer ebenen Fläche durch sich parallel zu den Laufschienen erstreckende Rippen gebildet werden.

Gegenstand der Erfindung ist auch ein Verfahren zur Herstellung eines aus einem Trägerkörper und Laufschienen bestehenden Auflagers für rollende Lastenträger, wobei Trägerkörper und Laufschienen aus unterschiedlich hartem Material bestehen, so daß bei Druckbelastung der Laufschienen nur einer dieser beiden Teile verformt wird, und zwar in der Weise, daß der Trägerkörper gegen eine Anschlagfläche eines Druckwerkzeugs angelegt, die Laufschienen auf den Trägerkörper aufgelegt und - wenn vorhanden alle - Laufschienen mit einem gleichen Druck gerichtet beaufschlagt werden, der über die Laufschiene auf den Trägerkörper diesen zur Verankerung der Laufschienen verformend, einwirkt.

Dieser Druck kann auf unterschiedliche Art erzeugt werden. Er kann mittels einer Presse, aber auch mit Rollwerkzeugen erfolgen. Vorteilhaft ist es im Sinne der Erfindung, wenn er variabel einstellbar ist. Nach der Erfindung ist es vorteilhaft, zuerst die Laufschienen nieder zu drücken und danach die Randzonen des Trägerkörpers auf die Laufschiene anzudrücken. Dies läßt sich nach beiden Methoden ermöglichen.

Ferner empfiehlt die Erfindung, die Druckregelung so zu gestalten, daß nicht nur ein zum Trägerkörper senkrechter Druck ausgeübt wird, sondern je nach Lagerart auch in schräger Richtung.

Weitere Merkmale der Erfindung werden im folgenden in Verbindung mit den schematischen Zeichnungen beschrieben. Dabei offenbart die Mehrzahl der Figuren den Zustand vor und nach dem Einpressen der Laufschienen, den Erfindungsgegenstand zeigen:

Fig. 1 bei einem runden Laufdraht und u-förmiger Mulde,

Fig. 2 die gleiche Anordnung mit einem Füllmittel,

Fig. 3 einen Trägerkörper ohne Aufnahmenut für die Laufschienen,

Fig. 4 eine ähnliche Anordnung mit einem Füllmittel,

Fig. 5 das Druckwerkzeug mit Anschlagfläche,

Fig. 6 u. 7 Laufschienen mit einem Lastenträger und

Fig. 8 u. 9 einen Ausschnitt bzw. Schnitt durch ein Ringlager nach der Erfindung.

In allen Figuren sind dieselben Bezugszeichen für dieselben Teile eingezeichnet worden, auch wenn sie im Detail jeweils anders ausgebildet sind. Der Trägerkörper trägt die Ziffer 1, die Laufschienen die Ziffer 2, das Druckwerkzeug ist symbolisch mit 3, ein Füllkörper mit 4 und die erfindungswesentliche Anschlagfläche für das Druckwerkzeug mit 5 bezeichnet. Einzelheiten dieser Teile sind mit jeweils anderen Nachziffern versehen.

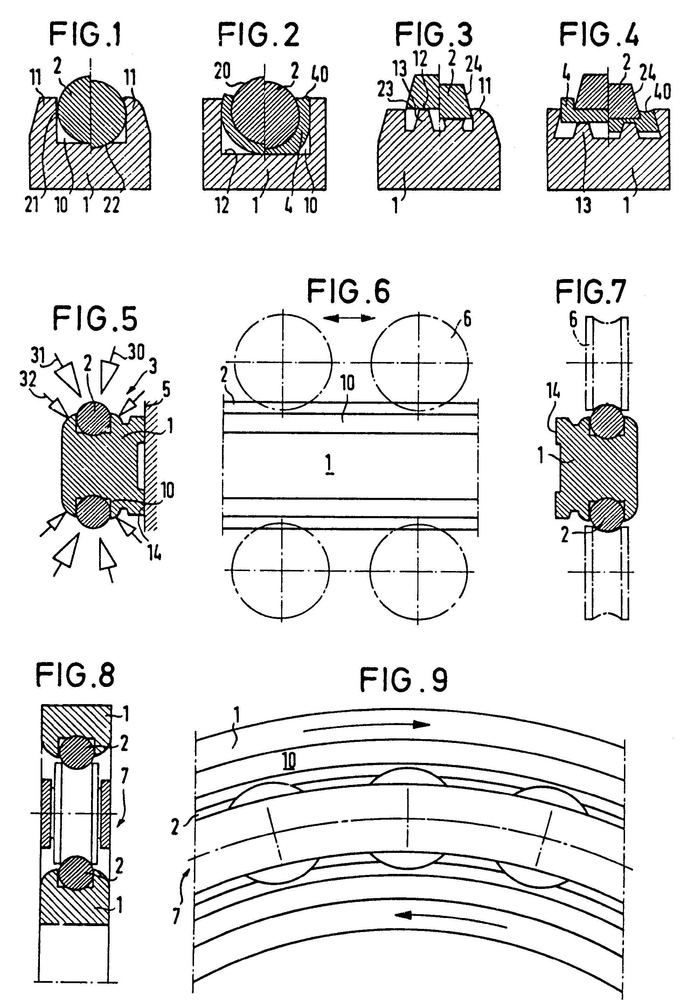

In Fig. 1 weist der Trägerkörper 1 eine u-förmige Nut 10 auf, die tiefer ist als der Radius der runden Laufschiene 2, so daß die Nutenränder 11 über den Scheitelpunkt 21 der Laufschiene 2 bei deren Einsetzen in die Nut 10 hinausragen. Dies ist eine Maßnahme, um die Laufschiene 2 im Trägerkörper zu verankern. In der linken Hälfte der Fig. 1, ist die Ausgangssituation, in der rechten Hälfte die verankerte Laufschiene 2 nach dem Einpressen dargestellt. Die Anschlagfläche für den Druck- oder Einwalzvorgang die unten und/oder seitlich liegen kann, ist bei dieser Ausführung des Lageraufbaus nicht eigens bezeichnet.

Aus der Figur ist erkennbar, daß die Berührung zwischen den Kontaktflächen 12 und 22 beim Einlegen der Laufschiene 2 in die Nut 10 nur linienförmig und nach dem Einpressen der Laufschiene 2 nur geringfügig grösser ist, was durch die unterschiedliche Gestaltung der Flächenformen erreicht wird. Deshalb wird auch nur ein geringer Druck auf den freiliegenden Umfang 20 der Laufschiene 2 benötigt, um diese im Trägerkörper 1 verankern zu können.

Nach dem Einpressen der Laufschiene 2 in die Nut 10 werden die Nutränder 11 gegen die Laufschiene 2 angepreßt, so daß diese absolut starr und unverrückbar mit dem Trägerkörper 1 verbunden ist.

Fig. 2 zeigt ein dem zuvorgenannten weitgehend ähnliches Ausführungsbeispiel der Erfindung. Die Nut 10 weist ein Übermaß auf, so daß ein Füllkörper 4 in sie eingelegt werden kann, der aus weicherem Material als Trägerkörper und Laufschiene besteht; dieser Füllkörper ist im Sinne der Erfindung ein Teil des Trägerkörpers. Auch hierbei ist die Kontaktfläche zwischen Trägerkörper 1 und Füllkörper 4 zuerst etwa linienförmig, danach jedoch etwas breiter. Bei dieser Ausführung brauchen die Nutenränder 11 nicht verformt zu werden, weil die Kanten 40 des Füllkörpers gegen die Laufschiene angedrückt werden kann. Die rechte Seite der Fig. 2 zeigt dies deutlich.

Die Verankerung der Laufschiene 2 im Trägerkörper 1 ist nur möglich, wenn die Laufschiene irgend ein Teil aufweist, das vom fließenden Material der Trägerkörper 1, 4 umflossen werden kann. Bei Laufschienen mit kreisförmigem Querschnitt ist dies der Scheitelpunkt 21, so daß die Nut eine entsprechende Tiefe haben muß.

Beim Ausführungsbeispiel der Fig. 3 weist der Trägerkörper 1 keine Nut 10 auf, sondern Rippen 13, die praktisch in dessen Oberfläche enden. Auch hier ist die Kontaktflächengrösse vor und nach dem Einpressen unterschiedlich groß, wenn auch in einem etwas geringeren Ausmaß. Diese Ausführungsform empfiehlt sich bei Laufschienen mit ebener Grundfläche 23. Zur Verankerung der Laufschienen sind an der Laufschiene 2 zwei Schrägflächen 24 vorgesehen, an welche die Nutenränder 11 angedrückt werden. Andere Verankerungen sind möglich.

Eine Parallele zur Fig. 2 stellt die Fig. 4 mit einem Füllkörper 4 dar. Bei dieser Ausführung graben sich die Rippen 13 in den weicheren Füllkörper 4 ein, die Ränder 40 werden gegen die Schrägflächen 24 angedrückt.

Diese Beispiele sollen nur andeuten, daß es viele Möglichkeiten gibt, das Prinzip zu verwirklichen.

In Fig. 5 ist nun dargestellt, wie die unverformbare Laufschiene 2 mit Druck beaufschlagt wird und wie beim Verfahren vorgegangen wird. Der im Strangpreßverfahren hergestellte Trägerkörper 1 ist mit zwei Nuten 20 versehen, die einen u-förmigen Querschnitt aufweisen. Er braucht nach dem Strangpressen nicht mehr spangebend bearbeitet zu werden, da es bei der Erfindung nicht darauf ankommt, daß die Nuten 10 oder die Rippen 13 mit äußerster Genauigkeit hergestellt wurden. Diese Genauigkeit wird beim Einpressen der Laufschienen 2 in den Trägerkörper 1 erzielt.

Zunächst wird der Trägerkörper 1 mit einer seiner Richtflächen 14 gegen die Anschlagfläche 5 angelegt, welche mit dem Druckwerkzeug - einer Presse mit Preßstempeln oder einem Einrollwerkzeug - fest verbunden ist. Diese Druckwerkzeuge sind an ihrer, mit den Laufschienen in Kontakt kommenden Stellen der oberen bzw. äußeren Kontur der Laufschienen so ausgebildet, daß sie sie während des Einpressens in die richtige Lage richten. Sind die Konturen der Laufschienen konvex, so sind diese des Druckwerkzeugs entsprechend konturengleich konkav oder umgekehrt.

Die Pfeile 3 der Fig. 5 deuten an, daß der Druck aus verschiedenen Richtungen erfolgen kann. Bei Lagern, die keine Schräglasten aufzunehmen haben, genügt ein zum Trägerkörper senkrechter Druck. Bei anderen Lagern kann der Druck in Richtung der Pfeile 30, 31 erfolgen, wobei der Druck in Richtung des Pfeils 30 in der Hauptbelastungsrichtung des Lagers verläuft, wogegen der Pfeil 31 fast in senkrechter Richtung wirkt. Die Pfeile 32 zeigen an, wie die Nutenränder 10 gegen die Laufschiene 2 angepreßt werden.

Durch dieses Zusammenwirken von Richt- 14 und Anschlagfläche 5 und die unterschiedliche Verformbarkeit der Materialien von Trägerkörper und Laufschienen ist es ohne jegliche spangebende Präzisionsarbeit möglich, mehrere Laufschienen in einen, aber auch mehrere, ein Lager bildende Trägerkörper positionsgerecht einzupressen und in ihnen zu verankern.

Die Figuren 6 und 7 zeigen, wie ein mit Rollen 6 versehener Lastenträger auf einem solchen Lager bewegt werden kann.

In den Figuren 8 und 9 ist ein Ringlager 7 nach der Erfindung dargestellt, bei welchem in den beiden Trägerkörpern 1 (Innen- und Außenring) je ein Draht eingepreßt ist. Auch hierbei weist jeder der Trägerkörper 1 eine Richtfläche 14 auf, die gegen die Anlagefläche 5 des Druckwerkzeugs 3 anliegt. Mindestens die Richtfläche 14 ist dabei kreisrund.

## Patentansprüche

1. Auflager für rollende Lastenträger, bestehend aus einem Trägerkörper (1) und wenigstens einer starr mit ihm verbundenen Laufschiene (2),

wobei der Trägerkörper (1) oder dessen mit der(den) Laufschiene(n) (2) in Kontakt kommenden Teile (4) aus weicherem, also unter Druck leichter, und die Laufschiene(n) (2) aus härterem, also unter Druck schwerer spanlos verformbaren Material bestehen,

die Laufschiene(n) (2) und der Trägerkörper (1) beim Verbinden durch ein Werkzeug druckbelastet sind,

und der Trägerkörper (1) eine Richtfläche (14) aufweist, die sich während der Herstellung der Verbindung auf eine Anschlagfläche (5) des Druckwerkzeuges stützt;

**dadurch gekennzeichnet,** daß die Laufschiene(n) (2) unter gerichtetem Druck aus mehreren Richtungen positionsgerecht zu derselben Anschlagfläche (5) in den Trägerkörper (1) eingepreßt und in ihm verankert ist(sind),

und daß die in Kontakt kommenden Flächen (12, 22) zwischen dem Trägerkörper (1) einerseits und Laufschiene(n) (2) andererseits vor dem Einpressen der Laufschiene(n) (2) in den Trägerkörper (1) kleiner sind als danach.

2. Auflager nach Anspruch 1, dadurch gekennzeichnet, daß die in Kontakt kommenden Flächen (12, 22) von Laufschiene(n) (2) und Trägerkörper (1) in ihrer Form weitgehend unterschiedlich sind.

3. Auflager nach Anspruch 1 oder 2, dadurch gekennzeichnet, daß bei gleichartigen (parallel zueinander verlaufenden) Kontaktflächen (12, 22) eine von ihnen durch Rippen (13) unterbrochen ist.

4. Auflager für rollende Lastenträger, bestehend aus einem Trägerkörper (1) und wenigstens einer starr mit ihm verbundenen Laufschiene (2),
    wobei der Trägerkörper (1) oder dessen mit der(den) Laufschiene(n) (2) in Kontakt kommenden Teile (4) aus weicherem, also unter Druck leichter, und die Laufschiene(n) (2) aus härterem, also unter Druck schwerer spanlos verformbaren Material bestehen,
    die Laufschiene(n) (2) und der Trägerkörper (1) beim Herstellen der Verbindung durch ein Werkzeug druckbelastet sind,
    und der Trägerkörper (1) eine Richtfläche (14) aufweist, die sich während der Herstellung der Verbindung auf eine Anschlafläche (5) des Druckwerkzeuges stützt;
    dadurch gekennzeichnet, daß im Trägerkörper (1) für jede Laufschiene (2) eine Nut (10) mit einem Übermaß vorgesehen und in diese Nut (10) ein weicher Füllkörper (4) als in Kontakt mit der Laufschiene kommendes Teil eingelegt ist,
    daß die Laufschiene(n) (2) unter gerichtetem Druck aus mehreren Richtungen positionsgerecht zu derselben Anschlagfläche (5) in den Trägerkörper (1) eingepreßt und in ihm verankert ist(sind),
    und daß die in Kontakt kommenden Flächen zwischen dem Trägerkörper (1) einerseits und Füllkörper(n) (4) andererseits vor dem Einpressen der Laufschiene(n) (2) in den Trägerkörper (1) kleiner sind als danach.

5. Verfahren zur Herstellung eines aus einem Trägerkörper und wenigstens einer Laufschiene bestehenden Auflagers für rollende Lastenträger,
    wobei Trägerkörper bzw. ein mit der(den) Laufschiene(n) in Kontakt kommender Teil des Trägerkörpers und Laufschiene(n) aus unterschiedlich hartem Material bestehen, so daß bei Druckbelastung der Laufschiene(n) nur der Trägerkörper oder dessen Teil verformt wird,
    dadurch gekennzeichnet, daß der Trägerkörper mit einer Richtfläche (14) gegen eine Anschlagfläche (5) eines Druckwerkzeuges angelegt und anschließend die Laufschiene(n) (2) mit Druck aus mehreren Richtungen beaufschlagt wird(werden), so daß sich der Druck von der(den) nicht verformbaren Laufschiene(n) (2) auf die angrenzenden Kontaktflächen des Trägerkörpers (1) bzw. dessen Teil überträgt und diesen zur Verankerung der Laufschiene(n) unter Vergrößerung der in Kontakt kommenden Flächen (12, 22) zwischen dem Trägerkörper (1) einerseits und Laufschiene(n) (2) andererseits verformt.

6. Verfahren nach Anspruch 5, dadurch gekennzeichnet, daß nach dem Einpressen der Laufschiene(n) (2) in den Trägerkörper (1) die der(den) Laufschiene(n) benachbarte(n) Zone(n) (11) der Oberfläche des Trägerkörpers (1) gegen die Laufschiene(n) (2) angedrückt werden.

7. Verfahren nach Anspruch 5, dadurch gekennzeichnet, daß unterschiedlicher Druck aus den mehreren Richtungen ausgeübt wird.

8. Verfahren zum Herstellen eines Auflagers nach Anspruch 4,
    dadurch gekennzeichnet, daß für jede Laufschiene (2) zu deren Aufnahme im Trägerkörper (1) die Nut (10) mit Übermaß im Vergleich zur Laufschiene (2) eingebracht, dann in diese Nut (10) der im Vergleich zur Härte der Laufschiene (2) weichere Füllkörper eingesetzt und die Laufschiene (2) in diesen Füllkörper eingepreßt wird.

## Claims

1. A support for rolling-type load carrier, comprising a carrier body (1) and at least one rail (2) rigidly connected thereto, where the carrier body (1) or the parts (4) thereof which come into contact with the rail(s) (2) consist of a softer material which thus can be more easily deformed under pressure, and the rail(s) (2) consist(s) of harder material, which thus is more difficult to deform under pressure without cutting, where the rail(s) (2) and the carrier body (1) are pressure-loaded by a tool during the connection, and where the carrier body (1) possesses a locating surface (14) which, during the establishment of the connection, bears against a stop surface (5) of the pressure tool, characterised in that the rail(s) (2) is (are) pressed into the carrier body (1), accurately positioned in relation to the same stop surface (5), under directed pressure from a plurality of directions and anchored therein, and that the surfaces (12, 22), which come into contact, between the carrier body (1) on the one hand and rail(s) (2) on the other hand are smaller prior to the impressing of the rail(s) (2) into the carrier body (1) than thereafter.

2. A support as claimed in Claim 1, characterised in that the surfaces (12, 22) of rail(s) (2) and carrier body (1) which come into contact differ substantially in their shape.

3. A support as claimed in Claim 1 or 2, characterised in that in the event of identical (parallel extending) contacting surfaces (12, 22), one thereof is interrupted by ribs (13).

4. A support for rolling-type load carriers comprising a carrier body (1) and at least one rail (2) rigidly connected thereto, where the carrier body (1) or the part (4) thereof which come into contact with the rail(s) (2) consist of a softer material, which thus can be more easily deformed under pressure, and the rail(s) (2) consist(s) of harder material, which thus is more difficult to deform under pressure without cutting, where the rail(s) (2) and the carrier body (1) are pressure-loaded by a tool during the establishment of the connection, and the carrier body (1) possesses a locating surface (14) which, during the establishment of the connection, bears against a stop surface (5) of the pressure tool, characterised in that in the carrier body (1) an over-dimensioned groove (10) is provided for each rail (2) and a soft filler body (4) is inserted into this groove (10) as a component which comes into contact with the rail, that the rail(s) (2) is (are) pressed into the carrier body (1), accurately positioned in relation to the same stop surface (5), under directed pressure from a plurality of directions and anchored therein, and that the surfaces of the carrier body (1) on the one hand and filler body (bodies) (4) on the other hand which come into contact are smaller prior to the impressing of the rail(s) (2) into the carrier body (1) than thereafter.

5. A process for the production of a support, consisting of a carrier body and at least one rail, for rolling-type load carriers, where the carrier body, or a part of the carrier body which comes into contact with the rail(s), and the rail(s) consist of materials of different hardness, so that when the rail(s) is (are) pressure-loaded only the carrier body or the part thereof is deformed, characterised in that a locating surface (14) of the carrier body is brought to bear against a stop surface (5) of a pressure tool, whereupon the rail(s) (2) is (are) subjected to pressure from a plurality of directions so that the pressure is transferred from the non-deformable rail(s) (2) to the adjacent contact surfaces of the carrier body (1) or the part thereof and deforms the latter in order to anchor the rail(s), thereby enlarging the surfaces (12, 22) of the carrier body (1) on the one hand and rail(s) (2) on the other hand which come into contact.

6. A process as claimed in Claim 5, characterised in that following the impressing of the rail(s) (2) into the carrier body (1), those zone(s) (11) of the surface of the carrier body (1) which is (are) adjacent top the rail(s) are pressed against the rail(s) (2).

7. A process as claimed in Claim 5, characterised in that different pressure is exerted from the plurality of directions.

8. A process for the production of a support as claimed in Claim 4, characterised in that for the accomodation of each rail (2) in the carrier body (1) the groove (10) is formed with excess dimensions in comparison to the rail (2), whereupon the filler body, which is softer in comparison to the hardness of the rail (2), is inserted in this groove (10) and the rail (2) is impressed into this filler body.

**Revendications**

1. Support pour des porteurs de charges roulants, constitué par un corps de support (1) et par au moins un rail de roulement (2) qui lui est relié rigidement, et dans lequel

le corps de support (1) ou ses parties (4) venant en contact avec le ou les rails de roulement (2) étant réalisés en un matériau plus mou, donc plus facilement déformable sans copeaux sous l'effet d'une pression, alors que le ou les rails de roulement (2) sont réalisés en un matériau plus dur, donc plus difficilement déformable sans copeaux sous l'effet d'une pression,

le ou les rails de roulement (2) et le corps de support (1) peuvent être chargés en pression par un outil, lors de la liaison, et

le corps de support (1) possède une surface directrice (14) qui prend appui, pendant l'établissement de la liaison, contre une surface de butée (5) de l'outil de pression;

caractérisé par le fait que le ou les rails de roulement (2) sont enfoncés, sous l'effet d'une pression directionnelle appliquée à partir de plusieurs directions, dans une position correcte par rapport à la surface de butée (5) de l'outil de pression dans le corps de support (1) et y sont ancrés, et

que les surfaces (12,22), qui viennent en contact, entre le corps de support (1) d'une part et le ou les rails de roulement (2) d'autre part, sont plus petites avant l'enfoncement du ou des rails de roulement (2) dans le corps de support (1) qu'après cet enfoncement.

2. Support selon la revendication 1, caractérisé par le fait que les surfaces (12, 22), qui viennent en contact, du ou des rails de roulement (2) et du corps de support (1) ont des formes très différentes.

3. Support selon la revendication 1 ou 2, caractérisé par le fait que dans le cas de surfaces de contact (12, 22) d'un même genre (qui sont parallèles entre elles), l'une d'elles est interrompue par des nervures (13).

4. Support pour des porteurs de charges roulants, constitué par un corps de support (1) et au moins un rail de roulement (2) qui lui est relié rigidement, et dans lequel

le corps de support (1) ou ses parties (4) venant en contact avec le ou les rails de roulement (2) étant réalisés en un matériau plus mou, donc plus facilement déformable sans copeaux sous l'effet d'une pression, alors que le ou les rails de roulement (2) sont réalisés en un matériau plus dur, donc plus difficilement déformable sans copeaux sous l'effet d'une pression,

le ou les rails de roulement (2) et le corps de support (1) peuvent être chargés en pression par un outil, lors de la liaison, et

le corps de support (1) possède une surface directrice (14) qui prend appui, pendant l'établissement de la liaison, contre une surface de butée (5) de l'outil de pression;

caractérisé par le fait qu'il est prévu dans le corps de support (1), pour chaque rail de roulement (2), une gorge surdimensionnée (10) et que dans cette gorge (10) est inséré un corps de remplissage mou (4) sous la forme d'un élément venant en contact avec le rail de roulement,

que le ou les rails de roulement (2) sont insérés sous une pression directionnelle à partir de plusieurs directions, d'une manière correcte en position par rapport à la surface de butée (5) de l'outil dans le corps de support (1) et y sont ancrés, et

que les surfaces, qui viennent en contact, du corps de support (1) d'une part et du ou des corps de-remplissage d'autre part, sont plus petites avant l'enfoncement du ou des rails de roulement (2) dans le corps de support (1), qu'elles ne le sont après.

5. Procédé pour fabriquer un support, constitué par un corps de support et par au moins un rail de roulement, pour des supports de charges roulants, et selon lequel

le corps de support ou une partie du corps de support, qui vient en contact avec le ou les rails de roulement, et un ou des rails de roulement sont réalisés en des matériaux ayant des duretés différentes de sorte que lors de l'application d'une pression au(x) rail(s) de roulement, seul le corps de support ou sa partie est déformé,

caractérisé par le fait que le corps de support est appliqué par une surface directrice (14) contre une surface de butée (5) d'un outil de pression et qu'ensuite, le ou les rails (2) sont chargés par une pression à partir de plusieurs directions de sorte que la pression est transmise par le ou les rails non déformables (2) aux surfaces de contact contiguës du corps de support (1) ou de la partie de ce dernier et déforme ce corps ou cette partie du corps pour réaliser l'ancrage du ou des rails de roulement moyennant un accroissement des surfaces (12,22), qui viennent en contact, du corps de support (1) d'une part et du ou des rails de roulement (2) d'autre part.

6. Procédé suivant la revendication 5, caractérisé par le fait qu'après l'enfoncement du ou des rails de roulement (2) dans le corps de support (1), la ou les zones (11), qui sont voisines du ou des rails de roulement, de la surface du corps de support (1) sont repoussées contre le ou les rails de roulement (2).

7. Procédé suivant la revendication 5, caractérisé par le fait qu'une pression différente est exercée à partir des différentes directions.

8. Procédé pour fabriquer un support suivant la revendication 4,

caractérisé par le fait que pour chaque rail de roulement (2), pour la réception de ce rail dans le corps de support (1), on aménage la gorge (10) avec un surdimensionnement par rapport au rail de roulement (2), puis on insère dans cette gorge (10) le corps de remplissage qui est plus mou par rapport à la dureté du rail de roulement (2), et on enfonce le rail de roulement (2) dans ce corps de remplissage.

# FIG.1

# FIG.2

# FIG.3

# FIG.4

# FIG.5

# FIG.6

# FIG.7

# FIG.8

# FIG.9